# EUROPEAN PATENT APPLICATION

(11) **EP 0 605 914 A1**
(43) Date of publication of application: **13.07.1994**
(21) Application number: 93203485.3
(22) Date of filing: 10.12.1993
(51) Int. Cl.: B29C 45/16, E04H 12/02, E04H 12/22

(54) **Elongate article having a core and a skin, manufactured from thermoplastic synthetic material, and a method and apparatus for manufacturing such articles**

(30) Priority: 10.12.1992 NL 9202139
(71) Applicant: Lankhorst Recycling B.V., NL-8607 AD Sneek (NL)
(72) Inventor: Dijkstra, Mient Cornelis, NL-8935 LL Leeuwarden (NL); Vreeman, Paul Johan Leonard, NL-8608 ED Sneek (NL)
(74) Representative: Smulders, Theodorus A.H.J., Ir.

(57) **Abstract**

An elongate article (40) having a core (42) and an outer skin (43). The core (42) consists of synthetic waste material (M2), for instance household waste material, and has the machinability and processability properties of wood and a specific weight ranging between approx. 0.65 and approx. 0.9. The length of the article is approx. ten times greater than the smallest transverse dimension. The outer skin (43) encloses the core (42) on all sides and is shaped substantially simultaneously with the core in one and the same mold, but consists of a material (M1) different from that of the core.

## Description

The invention relates to an elongate article substantially manufactured from thermoplastic synthetic material, which article comprises a core and an outer skin, which core substantially consists of synthetic waste material and has a specific weight ranging between approx. 0.65 and approx. 0.9, the core having the machinability and processability properties of wood and the article having a length greater than or equal to a factor f times the smallest transverse dimension d of the article, wherein it applies that f = approx. 10, and to a method and apparatus for manufacturing such articles.

Dutch patent 184 773 discloses a method by means of which thermoplastic synthetic waste material can be processed under low pressure into piles, beams, planks, etc., processable as wood, by means of a very simple extruder which requires no specially adapted screw, no screening element and no shaping nozzle. In the molds, which have an opening at the end remote from the extruder, only a low pressure occurs, so that the molds may be thin-walled and cheap. The shape of the articles manufactured is defined by the shape of the mold and the shaping gas active in the fluidized material contained in the mold, which gas exerts an expansive force on the material such that the shape defined by the mold can indeed be identified accurately in the finished product. When the known method is used, collapsed parts of outer surfaces of the articles thus manufactured are prevented in an effective manner.

The specific weight of the articles obtained is adjustable to some extent by means of the shaping gas and ranges between approx. 0.65 and 0.9. Consequently, the shaping gas does not lead to a foamed product.

A great advantage of the known method is that it is very suitable for processing unsorted and uncleaned synthetic waste, which may also have a particular proportion of other material, such as, for instance, wood, cardboard, paper, etc. The material to be processed need not be dry and may contain a mixture of different synthetic materials. Such low-grade waste may for instance originate from separately collected household refuse. However, with the known method it is also possible to process higher grade material such as production waste of synthetic material-processing industries.

The processing of low-grade waste is of substantial and increasing social importance. However, a problem is that such a raw material yields end products that, as far as physical appearance and properties are concerned, are less suitable, if at all, for some uses.

Dutch patent application 9100689 discloses a method wherein low-grade synthetic waste material is processed into elongate articles such as piles by filling a cover of a suitable material, for instance a PVC tube, with a material of inferior quality. However, this technique leads to a considerable limitation of the possibilities for shaping. For instance, no article can be obtained which is covered with the material of the desired quality also at the ends thereof. At the ends of such a pile, the core is not covered and hence remains visible and susceptible to influences from outside. Also, in this manner, only a pointed pile or a pile with a rounded or beveled crown can be obtained by utilizing separate end parts, made by injection molding, or by after-treating the rough pile.

Further, with the known method it is difficult to make an article having a varying transverse section along its length.

The same applies in the case where co-extrusion is used, with a core and a skin being extruded simultaneously by an extruder.

The object of the invention is to overcome the above drawbacks and to provide an article having the machining and processing properties of wood, into which low-grade waste of the above-described type can be processed to form products having relatively many uses.

To this end, according to the invention, an article of the above-described type is characterized in that the outer skin is a substantially closed outer skin of thermoplastic material, extending over the lateral surface as well as the end surfaces of the core, and shaped substantially simultaneously with the core in one and the same mold, but which consists of a material different from that of the core.

According to the invention, a method for manufacturing such an article is characterized in that first at least one first amount of at least one first thermoplastic synthetic material (mixture) is fluidized and fed to the mold under low pressure via an inflow opening, which at least one first amount fills the mold only partly, and that, subsequently, one next amount of a second thermoplastic synthetic material (mixture) consisting of waste material is fed to the mold, whilst at least in the next amount of material (mixture) a shaping gas is active causing the mold to be filled entirely, after which the mold is cooled and the finished article is subsequently removed from the mold, the shaping gas in the mold exerting an expansive force causing the mold to remain substantially entirely filled during cooling of the mold.

According to the invention, an apparatus for practising the method is characterized by an assembly comprising at least one mold and at least one extruder, provided with control means for effecting in operation the successive feeding of at least one first and one second amount of fluidized thermoplastic synthetic material under low pressure via an inflow opening of a mold, at least the last amount of material consisting of unsorted and uncleaned waste material and an expanding agent being active in at least the last amount of synthetic material in the mold.

The invention will be described in more detail hereinafter with reference to the accompanying drawings.
Fig. 2 schematically illustrates the principle of the invention; and
Fig. 3 schematically shows an example of an apparatus according to the invention;

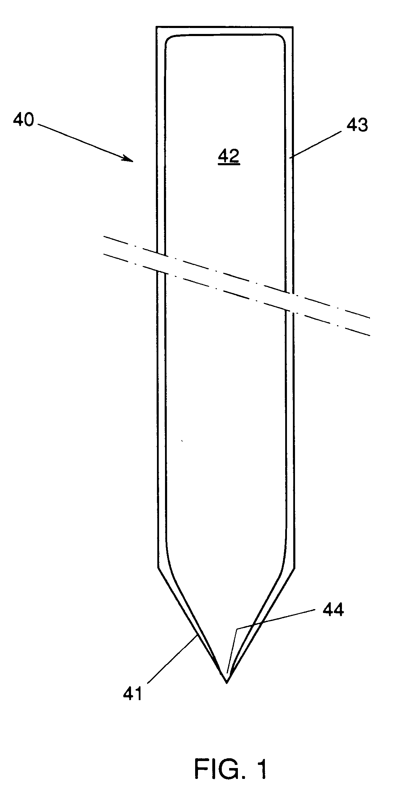

Fig. 1 schematically shows, in section, an example of a product according to the invention.

Fig. 1 shows a section of an example of a product 40 according to the invention. The product shown is a pile provided with a tip 41, having a core 42 of the material M2 and a layer or skin 43 consisting of the material M1. The skin 43 envelops the core completely, except for the zone 44 at the tip of the pile, corresponding to the inflow opening of the mold. Usually, however, this is not objectionable. It is important that the head 41 of the pile is covered completely with the material M1, which is not possible with the existing techniques.

Of course, the inflow opening may also be located at the other end of the mold. If a slight uncovered surface is objectionable, it is possible to work with an injection nozzle extending slightly into the mold. After withdrawal thereof, the skin material closes automatically at the location of the opening. If necessary, after withdrawal of the injection nozzle, a small amount of skin material can further be added.

The article shown has a core of waste material, injected into the mold under low pressure, which material may be unsorted and uncleaned material, for instance low-grade household waste material. The material may be a mixture of partly or wholly incompatible synthetic materials. The material may be moist and may contain sand, sawdust, wood, paper, cardboard, and the like. Although a shaping gas has been active in the material in the mold, the core is not a foam material. The material has the machining and processing properties of wood and has a specific weight ranging between approx. 0.65 and 0.9. For practical purposes, the material can be regarded as solid and is easy to nail, saw, etc.

Of course, the product may also be an unpointed pile or any other elongate article having a round or polygonal section, such as a beam or plank. In this connection, 'elongate' means a length which is approximately ten or more times greater than the smallest transverse dimension.

The skin or shell may consist of any suitable thermoplastic material. This may for instance be sorted waste material, such as production waste material, but also virgin material. Generally, for the skin a material will be selected having a higher quality than the core material. It is not strictly necessary that the material of the skin is compatible with that of the core, because the skin encloses the core on all sides. The thickness of the skin is adjustable depending on the intended eventual use of the articles, as will be clear from the following.

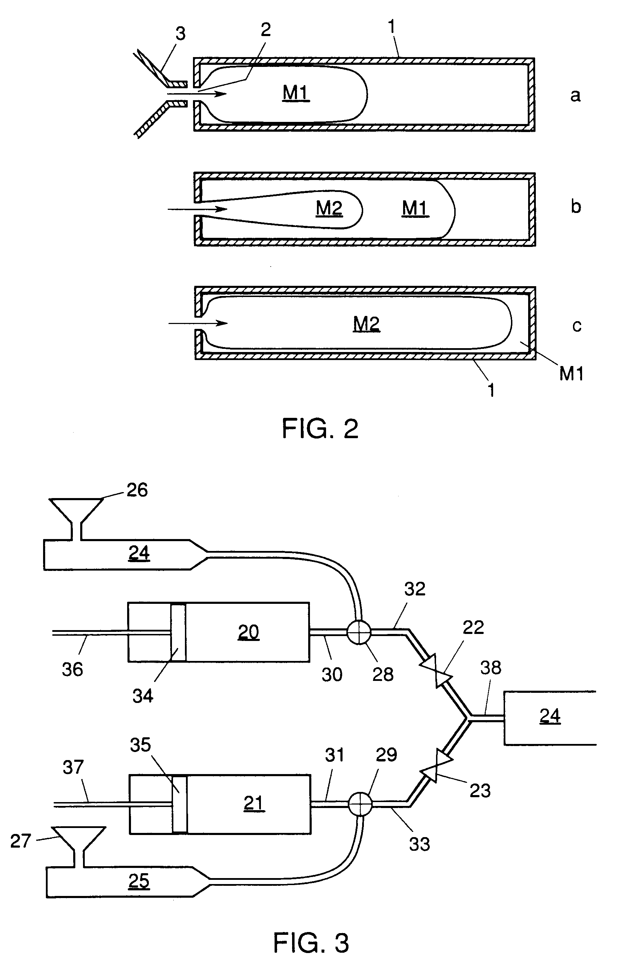

The principle of the method according to the invention is schematically illustrated in Fig. 2. Fig. 2 shows an elongate die or mold 1, as is also used when the method according to Dutch patent 184 773 is applied. Similarly to the method known from Dutch patent 184 773, no high pressure occurs in the method according to the present invention. The die is provided with material at a low thrust (< 30 bars) from an extruder in which the material to be processed is fluidized and mixed, or from a buffer cylinder, wherein the material is stored in fluidized condition. The extruder may advantageously be of the same simple type as described in Dutch patent 184 773 and therefore requires no adapted screw, no screening element and no shaping nozzle.

Fig. 2 shows a feed nozzle 3, connected to the inflow opening 2 of the die 1 and connected, directly or indirectly, to an extruder or a buffer cylinder. According to the invention, a first amount of fluidized material M1 is fed to the die 1 via the inflow opening 2. The first amount may be selected within wide limits, but should fill the die only partly, as is shown in Fig. 2 at a. The amount of the material M1 determines the eventual thickness of the outer layer.

Subsequently, a second amount of fluidized material M2 is fed to the die, as is shown in Fig. 2 at a. Experiments have shown that this second amount of material not only displaces the material which is already contained in the die in the direction away from the inflow opening, but thrusts it in all directions towards the wall of the mold. Thus, a core of the second material M2 is formed in the mold, which is entirely enclosed by a covering of the first material M1, as shown in Fig. 1c. The displacement process starts with the feed of the material M2, but continues after the termination thereof, due to the action of the shaping gas active in the material M2.

After the mold has been filled in the manner described, the mold is cooled. For this purpose, the mold is generally disconnected from the extruder or the buffer cylinder. Cooling may take place in the air or by means of water. For instance, the mold may be accommodated in a turret rotating about a horizontal shaft and partly extending into a water trough, as described in Dutch patent 184 773.

The shrinkage of the thermoplastic material that occurs during cooling is substantially compensated by the action of the shaping gas. Preferably, the amount of shaping gas is selected to be such that a very slight shrinkage occurs on all sides, which simplifies the withdrawal of the finished product from the mold.

The material M1, eventually forming the outer layer of the finished product, may consist of thermoplastic synthetic waste material, but may also consist of virgin material. The material M1 may be a technical synthetic material. The material M1 may be colored as desired by adding suitable colorants. It is also possible to mix the material M1 with glass fiber or other fibers, for instance for reinforcement. Optionally, the material M1 may or may not contain a substance, which may have been added separately, providing an expansion gas that is active in the mold.

The second material M2 eventually forms the core of the finished product. The material M2 may each consist of a (mixture of) thermoplastic synthetic material, but may advantageously contain (low-grade) thermoplastic waste material, such as is obtained through the collection of sorted household refuse. In addition to articles of various thermoplastic synthetic materials, such waste material usually comprises impurities in the form of sand, moisture, paper, cardboard, wood, etc. Such material is available in large amounts and can be processed without any problem with the method according to Dutch patent 184 773. Accordingly, however, depending on the composition of the waste material, end products are usually obtained whose uses are limited due to a physical appearance which is unsuitable for particular uses or due to unsuitable mechanical qualities.

In many cases, this drawback can be overcome by the present invention in that it is presently possible to adapt the propterties of the outer skin of the article to the intended use thereof, without, however, limiting the processing possibilities of low-grade thermoplastic synthetic waste.

When the above-described method is used, the core is directly enclosed on all sides by the material that was first introduced into the die.

The second material M2 should in any case contain a substance active in the mold as expanding agent, which may or may not have been added separately in whole or in part. The properties of the core can be controlled within certain limits by adding, for instance, an additional expanding agent, such as a blowing agent, or, conversely, by adding relatively little blowing agent, so as to influence the specific weight, for instance. The amount of expanding agent to be added depends on the desired end product and on the composition of the waste material, and can be determined relatively simply for a particular batch of waste material by experiment. The point is that waste material may contain moisture which becomes active in the mold as expansion gas, and/or other materials which decompose and provide a component acting as expansion gas in the mold.

As appears from Fig. 2, according to the invention, a mold is successively filled with a first amount of a first fluidized material or material mixture, and subsequently with a second amount of a second fluidized material or material mixture.

At least in the second amount of material or material mixture, a shaping gas should be active in the mold.

The mold may be open at the end remote from the inflow opening 2, in a similar manner as described in Dutch patent 184 773. However, the mold may also be closed.

The mold can be filled in various manners. It is possible to fill the mold directly by means of one or more extruders. For instance, a first extruder, supplying the material M1, can be connected to the mold for a predetermined period, after which a second extruder feeds the material M2 to the mold also for a predetermined period. For this purpose, time switch devices can be used that are known per se, controlling the extruders and/or corresponding closing devices. Alternatively, predetermined amounts of material could be fed to the extruders, enabling each extruder to fill the mold only to a predetermined extent.

If the mold is (partly) open at the end remote from the inflow opening, the second extruder may be controlled in another manner as well. Accordingly, a detection element is disposed at the opening of the mold, providing a signal as soon as synthetic material starts flowing from the opening. The signal is then used for switching off the second extruder.

Alternatively, a buffer cylinder can be used, feeding the first material M1 to the mold, and an extruder which feeds the second material M2 to the mold and which is switched off, whether or not by a time switch device or by a signal originating from a detector disposed in the vicinity of the open end of the mold.

In principle, it is also possible to use a single extruder, to which, in succession, predetermined amounts of the materials M1 and M2 are fed and which subsequently, after fluidization of materials, fills the mold.

Fig. 3 schematically shows an exemplary embodiment in which two buffer cylinders 20,21 are used, connectable to the mold or die 24 via operable closing devices 22,23. The buffer cylinders can be filled with predetermined amounts of the fluidized materials M1 and M2 by extruders 24,25. The extruders comprise filling devices 26,27, via which the raw material, which is usually compacted or granulated first, can be fed to the extruders. In the example shown, the extruders are connected, via switchable valves 28,29, with a line 30,31 leading to the buffer cylinders. In one position, the valves 28,29 form a connection between the extruders and the buffer cylinders, while in the other position, the buffer cylinders are connected to a line 32,33 leading to the closing devices 22,23. However, the extruders may also each be connected to the buffer cylinders via a separate line with associated closing device. After the buffer cylinders have been filled, which may for instance be detected via the position of the piston rods 36,37 connected to the pistons 34,35 in the buffer cylinders, the extruders are switched off. The buffer cylinders may be provided with heating elements for maintaining the fluidized material in fluidized condition.

If the extruder 24 is switched off, the valve 28 is turned and, if a mold is coupled to the outflow line 38, the closing device 22 can be opened. Accordingly, the buffer cylinder is pressed empty by means of the piston 34, with the material M1 flowing into the mold in the manner shown in Fig. 1. When the buffer cylinder 20 is empty, the closing device 22 is closed again and the contents of the second buffer cylinder 21 can be fed to the mold in a similar manner via a valve 29 and a closing device 23, as shown in Fig. 1.

The cycle described can be shortened by, for instance, filling one buffer cylinder, while the other buffer cylinder is being pressed empty.

After the mold has been filled, it can be disconnected and replaced by another mold to be filled.

After sufficient cooling, the finished product can be removed from the first mold, after which the mold is ready for renewed use.

The finished product consists of a core of the material M2, enclosed on all sides by the material M1. The material M2 can come to the surface only at the location of the inflow opening of the mold, but this can be avoided by using a nozzle extending into the mold and/or replenishing briefly with the material M1.

In the above-described manner of filling the mold, measured amounts of material are successively forced into the mold. The mold can then be a closed mold, but a mold which is (partly) open at the end remote from the inflow opening may also be used.

It is observed that in view of the above various variants will readily occur to the skilled person. For instance, instead of two different (mixtures of) materials, three or more different (mixtures of) materials can be fed to a mold, yielding a product which, viewed in section, is composed of three or more layers.

Further, for the feed of the materials, it is possible to use a nozzle extending into the mold. Particularly in the case where such a nozzle is used for the feed of the second material M2, an even distribution of the material M1 over the entire surface of the finished product can be promoted.

These and similar modifications are understood to fall within the scope of the invention.

## Claims

1. An elongate article substantially manufactured from thermoplastic synthetic material, said article comprising a core and an outer skin, said core substantially consisting of synthetic waste material and having a specific weight ranging between approx. 0.65 and approx. 0.9, the core having the machinability and processability properties of wood and the article having a length greater than or equal to a factor f times the smallest transverse dimension d of the article, wherein it applies that f = approx. 10, **characterized in** **that** the outer skin is a substantially closed outer skin of thermoplastic material, extending over the lateral surface as well as the end surfaces of the core, and shaped substantially simultaneously with the core in one and the same mold, but consisting of a material different from that of the core.

2. An article according to claim 1, **characterized in that** the material of the core consists of unsorted and uncleaned waste material.

3. An article according to claim 1 or 2, **characterized in** **that** the waste material comprises components of material not consisting of synthetic material.

4. An article according to any one of the preceding claims, **characterized in that** the outer skin consists of more than one layer.

5. An article according to any one of the preceding claims, **characterized in that** the outer skin consists of sorted production waste material.

6. An article according to any one of the preceding claims, **characterized in that** the outer skin is formed from a technical synthetic material.

7. An article according to any one of the preceding claims, **characterized in that** at least one colorant is added to the material of the outer skin.

8. An article according to any one of the preceding claims, **characterized in that** reinforcement fibers are added to the material of the outer skin.

9. A method for manufacturing in a mold an elongate article from thermoplastic synthetic material according to any one of claims 1-8, **characterized in that** first at least one first amount of at least one first thermoplastic synthetic material (mixture) is fluidized and fed to the mold under low pressure via an inflow opening, said at least one first amount filling the mold only partly, and that, subsequently, one next amount of a second thermoplastic synthetic material (mixture) consisting of waste material is fed to the mold, whilst at least in the next amount of material (mixture) a shaping gas is active causing the mold to be filled entirely, after which the mold is cooled and the finished article is subsequently removed from the mold, the shaping gas in the mold exerting an expansive force causing the mold to remain substantially entirely filled during cooling of the mold.

10. A method according to claim 9, **characterized in that** a mold is used which is at least partly open at the end remote from the inflow opening, that the at least one first amount of thermoplastic synthetic material (mixture) is a predetermined measured amount and that the feed of the last of said next amount of thermoplastic synthetic material (mixture) fed to the mold is continued until material starts flowing from the mold from the at least partly open end.

11. An apparatus for practising the method according to claim 9 or 10, **characterized** by an assembly comprising at least one mold and at least one extruder, provided with control means for effecting in operation the successive feeding of at least one first and one second amount of fluidized thermoplastic synthetic material under low pressure via an inflow opening of a mold, at least the last amount of material consisting of unsorted and uncleaned waste material and an expanding agent being active in at least the last amount of synthetic material in the mold.

12. An apparatus according to claim 11 designed for use of molds which are at least partly open at the end remote from the inflow opening, **characterized by** a detector for detecting material flowing from the at least partly open end of a mold and providing a signal causing the feed of material to the inflow opening to end.

13. An apparatus according to claim 11 or 12, **characterized** **by** a turret adapted to accommodate a plurality of molds and displace the molds from a filling position, wherein the inflow opening faces a material feed apparatus, to a cooling position.

14. An apparatus according to claim 13, **characterized in** **that** the turret partly extends into a water trough.
